# DEMANDE DE BREVET EUROPEEN

(11) **EP 3 620 665 A1**
(43) Date de publication de la demande: **11.03.2020**
(21) Numéro de dépôt: 19195105.2
(22) Date de dépôt: 03.09.2019
(51) Int. Cl.: F16B 5/02, F16B 5/04, F16B 31/02, F16B 19/10

(54) **VIS AVEC GORGE DE RUPTURE, FIXATION COMPRENANT UNE TELLE VIS, ASSEMBLAGE ET PROCÉDÉ D'INSTALLATION ASSOCIÉS**

(30) Priorité: 04.09.2018 FR 1857929
(71) Demandeur: Lisi Aerospace, 75012 Paris (FR)
(72) Inventeur: COUDERC, Jérôme, 12270 Lafouillade (FR)
(74) Mandataire: Lavoix

(57) **Abrégé**

La présente invention concerne une vis comprenant une tête (22) et une portion filetée, une extrémité de la tête formant une surface d'extrémité (32) sensiblement disposée dans un premier plan perpendiculaire à l'axe principal,
la vis comprenant en outre un élément de préhension (30) solidaire de la tête, une jonction (50) entre ladite tête et ledit élément de préhension comprenant une gorge (52) de rupture ayant sensiblement une forme de révolution.

Une section de la gorge de rupture présente une portion (60) en arc de cercle, un centre (68) dudit cercle étant sensiblement disposé dans le premier plan, de sorte qu'un plan contenant une surface de rupture de la gorge (52) soit sensiblement confondu avec ledit premier plan.

## Description

La présente invention concerne une vis s'étendant selon un axe principal et comprenant une tête et une portion filetée, une extrémité de la tête opposée à la portion filetée formant une surface d'extrémité sensiblement disposée dans un premier plan perpendiculaire à l'axe principal, la vis comprenant en outre un élément de préhension solidaire de la tête à l'opposé de la portion filetée, une jonction entre ladite tête et ledit élément de préhension comprenant une gorge de rupture configurée pour casser sous une contrainte en torsion supérieure à un seuil prédéterminé, ladite gorge de rupture ayant sensiblement une forme de révolution autour de l'axe principal.

L'invention s'applique particulièrement aux fixations aveugles comprenant une telle vis, c'est-à-dire aux fixations installées au travers de structures par un seul côté desdites structures, communément appelées côté « accessible ». Ces fixations sont notamment utilisées dans l'assemblage de structures d'aéronef.

Des fixations aveugles comprenant des vis du type précité, ainsi que des procédés d'installation associés, sont notamment décrits dans les documents FR3016417 et FR3053745 au nom de la Demanderesse.

L'élément de préhension de la vis permet de saisir la fixation, puis de l'installer dans une structure par un mouvement de traction, puis de rotation, ou un mouvement unique de rotation. Lorsqu'une configuration installée est atteinte, la poursuite du mouvement de rotation conduit à une rupture de la vis entre ledit élément de préhension et la tête. Ladite tête se retrouve affleurante avec une surface externe de la structure lorsque la tête est installée dans une fraisure de la structure ou d'une douille.

Dans le domaine aéronautique, les surfaces sont de préférence dépourvues d'aspérités, notamment pour des questions d'aérodynamisme. Il est donc préférable que la rupture de l'élément de préhension conduise à une tête de vis présentant une surface la plus lisse possible. Dans le cas contraire, la vis présente une zone de rupture sous forme de protrusion, en relief, ou sous forme d'intrusion, en creux.

Une zone de rupture sous forme de protrusion nécessite une étape ultérieure l'installation de la vis doit soit être suivie d'une étape d'arasage qui engendre des coûts et du temps d'installation supplémentaires, comme par exemple décrit dans le brevet EP 2 042 250 B1. Une zone de rupture sous forme d'intrusion engendre des trainées aéronautiques.

La présente invention a pour but de résoudre ce problème, en configurant la vis de sorte à optimiser la géométrie de rupture de la gorge.

A cet effet, l'invention a pour objet une vis du type précité, dans laquelle, dans un deuxième plan comprenant l'axe principal, une section de la gorge de rupture présente une portion en arc de cercle, un centre dudit cercle étant sensiblement disposé dans le premier plan, de sorte qu'un plan contenant la surface de rupture de la gorge soit sensiblement confondu avec ledit premier plan.

Suivant d'autres aspects avantageux de l'invention, la vis comporte l'une ou plusieurs des caractéristiques suivantes, prises isolément ou suivant toutes les combinaisons techniquement possibles :
- la portion en arc de cercle de la gorge de rupture comporte une première et une seconde parties, respectivement disposées sur la tête et sur l'élément de préhension de part et d'autre du premier plan, ladite première partie formant une cavité dans la tête par rapport à la première surface d'extrémité ;
- la gorge de rupture présente une première et une seconde lèvres tangentes à la portion en arc de cercle et sensiblement tronconiques, lesdites première et seconde lèvres étant respectivement disposées sur la tête et sur l'élément de préhension ;
- la première lèvre forme un premier angle avec la surface d'extrémité de la tête, et un deuxième angle avec la deuxième lèvre ; le premier angle est compris entre 5° et 25° et plus préférentiellement compris entre 10° et 15° ; et le deuxième angle est compris entre 15° et 60°, plus préférentiellement compris entre 25° et 35° et encore plus préférentiellement proche de 30° ;
- la tête de la vis est fraisée ;
- la vis comprend en outre un fût disposé entre la tête et la portion filetée, ledit fût comportant de préférence une première et une seconde portions cylindriques reliées par un épaulement, la première portion étant adjacente à la tête et présentant un premier diamètre, la seconde portion étant adjacente à la portion filetée et présentant un second diamètre inférieur au premier diamètre.

L'invention se rapporte en outre à une fixation comprenant une vis telle que décrite ci-dessus et une douille comprenant une collerette et un corps sensiblement cylindrique, adjacents selon l'axe principal ; le corps de la douille comportant : une zone de déformation apte à former un bulbe externe ; et une portion taraudée apte à coopérer avec la portion filetée de la vis.

Suivant un aspect avantageux de l'invention, la collerette de la douille est tronconique et apte à recevoir la tête fraisée de la vis, une extrémité de ladite collerette, opposée au corps de la douille, étant sensiblement disposée dans un troisième plan perpendiculaire à l'axe principal.

L'invention se rapporte en outre à un assemblage comprenant : au moins une structure comprenant une première et une seconde faces opposées et un perçage débouchant sur chacune desdites faces ; et une fixation telle que décrite ci-dessus. La collerette de la douille est au contact de la tête de la vis et est en butée dans le perçage de la structure ; la zone de déformation du corps de la douille est dans une configuration installée, sous forme d'un bulbe externe au contact de la seconde face de la structure ; et la tête et l'élément de préhension de la vis sont dissociés, ladite tête présentant une surface de rupture sensiblement coplanaire à la surface d'extrémité de la vis et à l'extrémité de la collerette de la douille.

Suivant un aspect avantageux de l'invention, la surface de rupture est bordée par la première partie de la portion en arc de cercle de la gorge de rupture.

L'invention se rapporte en outre à un procédé d'installation d'une fixation telle que décrite ci-dessus dans une structure comprenant une première et une seconde faces opposées et un perçage débouchant sur chacune desdites faces, ledit procédé comprenant successivement les étapes suivantes : assemblage de la portion filetée de la vis avec la portion taraudée de la douille, la zone de déformation du corps de ladite douille étant dans une configuration initiale cylindrique ; insertion de la douille dans le perçage de la structure, du côté de la première face ; maintien de la collerette au contact de la première face ; traction ou vissage de la vis dans la douille jusqu'à formation d'un bulbe externe au contact de la seconde face ; et torsion de l'élément de préhension par rapport à la tête de la vis autour de l'axe principal, jusqu'à rupture de la gorge de rupture et formation de la surface de rupture sur la tête.

L'invention sera mieux comprise à la lecture de la description qui va suivre, donnée uniquement à titre d'exemple non limitatif et faite en se référant aux dessins sur lesquels :
- la figure 1 est une vue en perspective d'une vis selon un mode de réalisation de l'invention, dans une configuration initiale ;
- la figure 2 est une vue de détail, en coupe partielle, de la vis de la figure 1 ;
- la figure 3 est une vue en coupe partielle d'un assemblage comprenant une fixation selon un mode de réalisation de l'invention, ladite fixation comprenant la vis de la figure 1 dans une configuration installée ;
- la figure 4 est une vue de détail, en coupe partielle, de la figure 3 ;
- la figure 5 est une photographie d'un assemblage comprenant une fixation selon un mode de réalisation de l'invention, ladite fixation comprenant la vis de la figure 1 dans une configuration installée, photographie à laquelle est associée une coupe partielle de la tête de la fixation ;
- la figure 6 est photographie d'un assemblage comprenant une fixation de l'art antérieur dans une configuration installée, photographie à laquelle est associée une coupe partielle de la tête de la fixation ; et
- la figure 7 est une vue en coupe partielle d'une tête de fixation de la figure 6 dans une configuration installée.

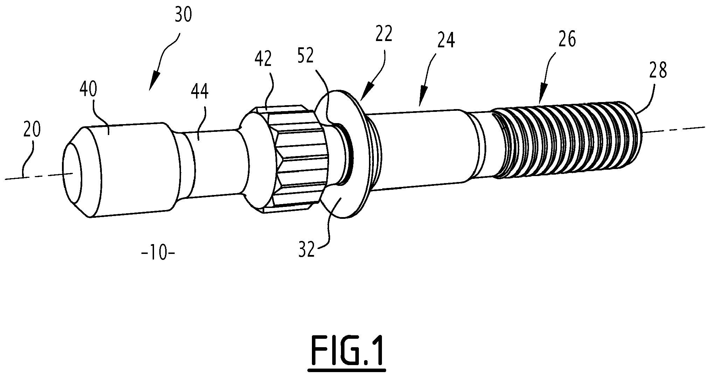

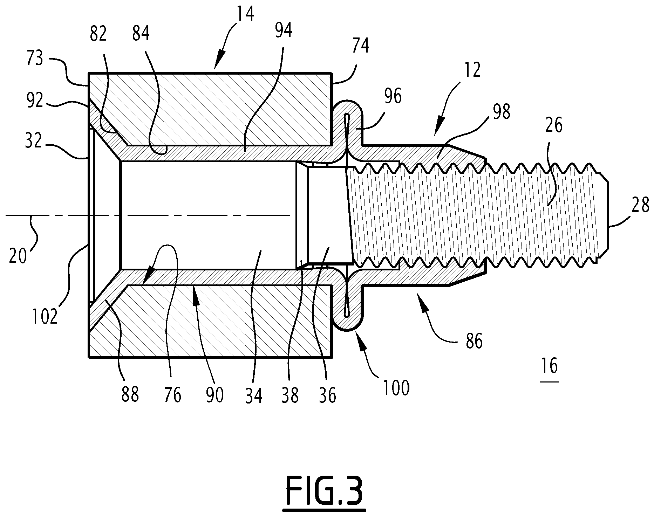

La figure 1 représente une vis 10 dans une première configuration dite configuration initiale. La vis 10 est destinée à faire partie d'une fixation 12, apte à être assemblée à une structure 14 pour former un assemblage 16. La fixation 12 et l'assemblage 16, dans lesquels la vis 10 est dans une deuxième configuration dite configuration installée, sont représentés sur la figure 3.

La vis 10 s'étend selon un axe principal 20 et comporte une tête 22, un fût 24 et une portion filetée 26, adjacents selon ledit axe principal. Une première extrémité 28 de la vis 10, selon l'axe principal 20, est formée par une extrémité libre de la portion filetée 26.

La vis 10 comprend en outre un élément de préhension 30. Dans la configuration initiale de la figure 1, ledit élément de préhension 30 est adjacent à la tête 22 et forme une seconde extrémité de la vis 10 selon l'axe principal 20.

De préférence, la vis 10 est métallique, par exemple en acier inoxydable du type A286, ou en alliage de titane.

Une première extrémité de la tête 22 forme une surface d'extrémité 32 sensiblement disposée dans un plan perpendiculaire à l'axe principal 20. Plus précisément, la surface d'extrémité 32 est en forme de couronne circulaire.

De préférence, comme dans le mode de réalisation représenté, la tête 22 est une tête fraisée. Plus précisément, la tête 22 est sensiblement tronconique, la surface d'extrémité 32 correspondant à l'extrémité évasée du tronc de cône. En variante non représentée, la tête de la vis est une tête protubérante.

Une seconde extrémité de la tête 22 est solidaire du fût 24. Dans le mode de réalisation représenté, ledit fût 24 comporte une première 34 et une seconde 36 portions, reliées par un épaulement 38. Chacune des première 34 et seconde 36 portions a une forme sensiblement cylindrique de révolution, disposée selon l'axe principal 20. La première portion 34, adjacente à la tête 22, présente un diamètre supérieur à celui de la seconde portion 36 adjacente à la portion filetée 26. Le fût 24 est notamment analogue au fût de la vis décrit dans le document FR3053745.

Selon une variante non représenté, le fût de la vis est cylindrique de diamètre sensiblement constant entre la tête 22 et la portion filetée 26.

L'élément de préhension 30 de la vis 10 est apte à coopérer avec un outil de pose pour une installation automatisée du rivet de fixation 12. L'élément de préhension 30 comporte par exemple une première 40 et une seconde 42 portions de préhension, reliées par une portion de blocage 44. Les première 40 et seconde 42 portions de préhension et la portion de blocage 44 sont destinées respectivement à guider l'introduction de la fixation 12 dans un outil de pose, à transmettre un couple de torsion et à limiter un mouvement axial de la fixation dans l'outil de pose. Une fixation comprenant un tel élément de préhension, ainsi que sa coopération avec un outil de pose, sont notamment décrits dans le document FR3016417.

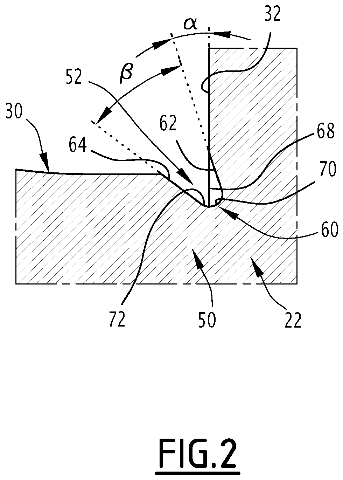

Dans la configuration initiale de la figure 1, l'élément de préhension 30 est relié à la tête 22 par une jonction 50 (figure 2). Selon l'axe principal 20, ladite jonction 50 présente la plus faible section de l'élément de préhension 30, et préférentiellement de la vis 10. La jonction 50 comprend notamment une gorge de rupture 52, configurée de sorte à soutenir un certain niveau de contrainte en traction selon l'axe principal 20, et à céder au-delà d'un certain seuil de contrainte en torsion autour dudit axe.

La gorge de rupture 52 présente sensiblement une forme de révolution autour de l'axe principal 20. La figure 2 montre une vue de détail de la vis 10 au niveau de la jonction 50, la gorge de rupture 52 étant représentée en coupe partielle dans un plan de coupe comprenant l'axe principal 20.

La gorge de rupture 52 comporte une portion centrale 60 incurvée, prolongée par une première 62 et une seconde 64 lèvres. Lesdites lèvres 62, 64 sont situées de part et d'autre de ladite portion centrale 60, respectivement sur la tête 22 et sur l'élément de préhension 30. Chacune des première 62 et seconde 64 lèvres a une forme sensiblement tronconique. Un bord libre 66 de la première lèvre 62 forme un bord interne de la surface d'extrémité 32, en forme de couronne circulaire, de la tête 22.

Dans le plan de coupe de la figure 2, la portion centrale 60 présente une section en arc de cercle, les génératrices des première 62 et seconde 64 lèvres étant tangentes audit cercle. Un centre 68 dudit cercle est sensiblement disposé dans le plan de la surface d'extrémité 32 de la tête 22.

La portion centrale 60 comporte ainsi une première 70 et une seconde 72 parties, situées de part et d'autre du plan de la surface d'extrémité 32. Ladite première partie 70, ainsi que la première lèvre 62, forment un bas-relief dans la tête 22 par rapport à la surface d'extrémité 32.

Dans le plan de coupe de la figure 2, la première lèvre 62 forme un premier angle α avec la surface d'extrémité 32 de la tête 22, et un deuxième angle β avec la deuxième lèvre 64.

De préférence, le premier angle α est compris entre 5° et 20°, plus préférentiellement entre 10° et 15°.

De préférence, le deuxième angle β est compris entre 15° et 60° et plus préférentiellement entre 25° et 35°. Encore plus préférentiellement, l'angle β est proche de 35°.

L'assemblage 16 de la figure 3, comprenant la structure 14 et la fixation 12 en configuration installée, va maintenant être décrit.

La structure 14 est de préférence formée de plusieurs éléments empilés, solidarisés par la fixation 12. Un seul élément est représenté sur la figure 3.

La structure 14 comprend une première 73 et une deuxième 74 faces opposées sensiblement planes et parallèles. La première face 73 est accessible à un opérateur. La deuxième face 74 est éventuellement non accessible.

La structure 14 comprend en outre un perçage 76 débouchant sur chacune des faces 73, 74. Le perçage 76 est sensiblement perpendiculaire aux faces 73, 74 de la structure 14.

Le perçage 76 comporte une surface fraisée 82, adjacente à la première face 73, et une surface cylindrique 84, adjacente à la surface fraisée et s'étendant jusqu'à la deuxième face 74. La surface fraisée 82 présente une forme sensiblement tronconique.

La fixation 12 comporte la vis 10 précédemment décrite, ainsi qu'une douille 86. Ladite douille est préférentiellement métallique de même que la vis 10.

La douille 86 comprend une collerette évasée 88 et un corps 90 tubulaire, adjacents l'un à l'autre. Une extrémité libre 92 de la collerette 88 forme une surface en couronne circulaire sensiblement plane.

Le corps 90 comprend : une zone de serrage 94, apte à recevoir le fût 24 de la vis, une zone de déformation 96 adjacente à la zone de serrage ; et une portion taraudée 98 adjacente à la zone de déformation et apte à coopérer avec la portion filetée 26 de la vis 10. Dans une configuration initiale de la fixation 12, non représentée, le corps 90 de la douille 86 est cylindrique sur toute sa longueur. Une fixation analogue à la fixation 12 est notamment décrite dans le document FR3053745.

Dans la configuration installée représentée sur la figure 3, la douille 86 est insérée dans le perçage 76 de la structure 14 et la vis 10 est insérée dans ladite douille. La collerette 88 de la douille est assemblée à la surface fraisée 82 du perçage 76 et reçoit la tête 22 de la vis 10. La première face 73 de la structure 14, l'extrémité libre 92 de la douille 86 et la surface d'extrémité 32 de la vis 10 sont sensiblement coplanaires.

De plus, la zone de déformation 96 du corps 90 forme un bulbe 100 en contact avec la deuxième face 74 de la structure 14.

Enfin, l'élément de préhension 30 est dissocié de la tête 22 de la vis 10. L'élément de préhension 30 n'est pas représenté sur la figure 3.

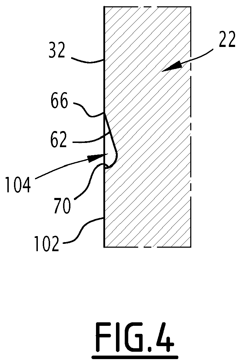

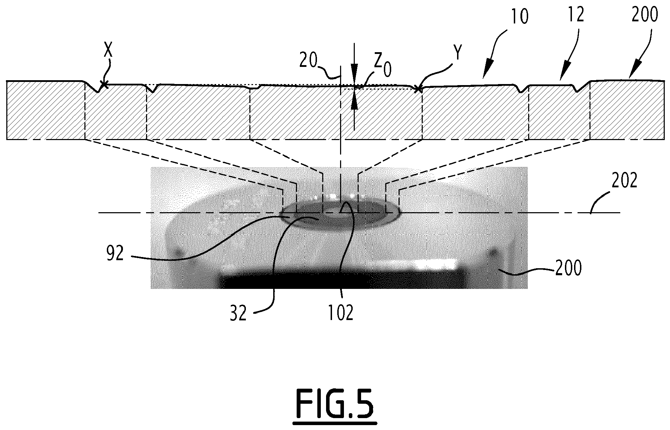

Dans la configuration installée, la tête 22 présente donc une surface de rupture 102 à la place de la jonction 50 de la configuration initiale. Comme visible sur les figures 4 ou 5, la surface de rupture 102 est bordée par une rainure 104 sensiblement circulaire, formée par la première partie 70 de la portion centrale 60 de la gorge de rupture 52 ainsi que par la première lèvre 62.

La surface de rupture 102 est sensiblement coplanaire à la surface d'extrémité 32, de manière à obtenir une surface la plus lisse possible au niveau de la tête 22 de la vis 10.

Le centre 68 de la portion centrale 60 étant disposé dans le plan de la surface d'extrémité 32, la plus faible section de la jonction 50 se trouve ainsi dans ledit plan. Une telle configuration conditionne la géométrie de rupture de ladite jonction lors de l'installation de l'assemblage 16. Un procédé de mise en oeuvre de l'installation est décrit ci-après :
Tout d'abord, la vis 10 et la douille 86 sont assemblées pour former la fixation 12. Plus précisément, la première extrémité 28 de la vis 10 est introduite dans la douille 86, du côté de la collerette 88 ; puis la portion filetée 26 de la vis est vissée dans la portion taraudée 98 de la douille, jusqu'à ce que la tête 22 de la vis vienne en butée contre la collerette 88, de forme tronconique complémentaire. La fixation 12, dans une configuration initiale non représentée, est ainsi formée.

Les étapes suivantes sont par exemple réalisées à l'aide d'un outil de pose en prise avec l'élément de préhension 30 de la vis 10, de manière analogue aux procédés décrits dans les documents FR3016617 et FR3053745.

La fixation 12 en configuration initiale est introduite dans le perçage 76 à partir de la première face 73 de la structure 14, et déplacé jusqu'à la mise en butée de la collerette 88 de la douille 86 contre la surface fraisée 82 dudit perçage. La première face 73 de la structure 14 et l'extrémité libre 92 de la douille 86 sont alors sensiblement coplanaires. La portion taraudée 98 et la zone de déformation 96 de la douille, ainsi que la portion filetée 26 de la vis, forment une saillie hors de la structure 14, du côté de la deuxième face 74.

La douille 86 est ensuite maintenue en place dans le perçage 76, par exemple en exerçant une poussée axiale contre l'extrémité libre 92 de la collerette 88. Simultanément, une traction axiale est exercée sur la vis 10, de sorte à rapprocher de la structure 14 la première extrémité 28 de ladite vis. La portion taraudée 98 de la douille est entraînée par le déplacement de ladite première extrémité 28, ce qui induit une déformation plastique de la zone de déformation 96. Ladite déformation plastique conduit au bulbe externe 100 formé contre la deuxième face 74 de la structure.

La collerette 88 et la surface fraisée 82 d'une part, et le bulbe externe 100 et la deuxième face 74 d'autre part, forment des butées opposées qui bloquent axialement le rivet 12 dans le perçage 76 de la structure 14.

Ensuite, un couple est exercé par l'outil de pose sur l'élément de préhension 30, autour de l'axe principal 20. La portion filetée 26 de la vis 10 est ainsi vissée dans la portion taraudée 98 de la douille 86, jusqu'à ce que la tête 22 revienne en butée contre la collerette 88. La surface d'extrémité 32 de ladite tête est alors sensiblement coplanaire de l'extrémité libre 92 de la douille 86 et de la première face 73 de la structure 14.

Le couple est maintenu au niveau de l'élément de préhension 30 jusqu'à atteindre un seuil de rupture en torsion de la gorge de rupture 52. La vis 10 se casse alors au niveau de la jonction 50, de manière à dissocier l'élément de préhension 30 et la tête 22.

A la place de la jonction 50, une surface de rupture 102 se forme sur la tête 22 de la vis. Etant donnée la configuration de la gorge de rupture 52 précédemment décrite, la surface de rupture 102, correspondant au plus faible diamètre de l'élément de préhension 30, se forme sensiblement dans le même plan que la surface d'extrémité 32. Par sensiblement, on entend que la surface de rupture 102 est décalée axialement d'au maximum 15 µm par rapport au plan contenant la surface d'extrémité 32, plus ou moins l'incertitude du moyen de mesure, par exemple un micromètre.

L'assemblage 16 est alors dans la configuration installée, représentée à la figure 3 sans l'élément de préhension 30. Dans le plan de la première face 73 de la structure 14, la tête 22 de la vis 10 présente une surface 32, 102 sensiblement lisse et plane, à l'exception de la rainure circulaire 104.

Ainsi, l'assemblage 16 présente un état de surface optimal du côté de la première face 73 de la structure 14.

La Demanderesse a réalisé des essais d'installation de fixations 12 dans des coupons 200 représentatifs d'une structure 14. La fixation 12 est en configuration installée, comme représentée sur la figure 5, et l'axe principal 20 est considéré comme vertical. Les points le plus bas Y et le plus haut X de la surface d'extrémité 32 sont déterminés selon une première droite horizontale 202 passant par l'axe principal 20. Une première hauteur Z_{0°} est calculée entre le point le plus haut X et le point le plus bas Y. Une deuxième mesure similaire de hauteur Z_{90°} est ensuite réalisée sur une deuxième droite horizontale passant par l'axe principal 20, décalée de 90° par rapport à la première droite. La planéité est la différence des deux hauteurs Z_{0°} et Z_{90°} mesurées pour chaque fixation. Les résultats de planéité sont indiqués dans le tableau 1 ci-dessous :

**Tableau 1**

| Diamètre (mm) | N° fixation | Hauteur (mm) | | | Planéité moyenne (mm) |
|---|---|---|---|---|---|
| | | Z_{0°} | Z_{90°} | Planéité (mm) | |
| 8 | 1 | 0,191 | 0,198 | 0,007 | **0,005** |
| | 2 | 0,219 | 0,203 | 0,016 | |
| | 3 | 0,218 | 0,206 | 0,012 | |
| | 4 | 0,194 | 0,196 | 0,002 | |
| | 5 | 0,178 | 0,201 | 0,023 | |
| | 6 | 0,183 | 0,187 | 0,004 | |
| | 7 | 0,184 | 0,203 | 0,019 | |
| 6 | 1 | 0,132 | 0,152 | 0,010 | **0,014** |
| | 2 | 0,151 | 0,119 | 0,032 | |
| | 3 | 0,111 | 0,139 | 0,028 | |
| | 4 | 0,075 | 0,063 | 0,012 | |
| | 5 | 0,112 | 0,103 | 0,009 | |
| | 6 | 0,086 | 0,094 | 0,008 | |
| | 7 | 0,092 | 0,094 | 0,002 | |

La planéité moyenne est de l'ordre de 5 à 15 µm, ce qui indique une cassure dans un plan d'épaisseur très fine. Cette planéité est rendue possible grâce à la section en arc de cercle de la gorge de rupture.

La Demanderesse a également mesuré la différence de hauteur entre la structure et la douille, puis la structure et la vis afin de déterminer l'affleurement (aussi dénommé par l'anglicisme « flushness »).

Pour cela, dix-huit fixations ont été installées dans des coupons présentant autant de perçages fraisés que de fixations à tête fraisée. Prenant en compte la première face 73 de la structure comme point de référence, les différences de hauteur de plan entre la structure et la surface d'extrémité 92 de la collerette de la douille, la structure et la surface d'extrémité 32 de la tête de vis, et la structure et la surface de rupture 102, en un point minimum et en un point maximum, ont été mesurées.

L'écart maximal entre les plans contenant la surface d'extrémité 92 de la collerette de la douille, la surface d'extrémité 32 de la tête de vis, et la surface de rupture 102 a été calculé pour chaque fixation installée. Les valeurs utilisées pour calculer cet écart maximal sont en gras dans le tableau 2 ci-dessous :

**Tableau 2**

| Essai # | **Structure / Douille (mm)** | **Structure / Tête de vis (mm)** | **Structure / Surface de rupture (mm)** | | **Ecart max. de hauteur de plan (mm)** | **moyenne Ecart max. (mm)** |
|---|---|---|---|---|---|---|
| | | | **Min** | **Max** | | |
| 1 | -0,111 | **-0,070** | **-0,166** | -0,096 | 0,07 | -0,10 |
| 2 | -0,10 | **-0,05** | **-0,19** | -0,04 | -0,14 | |
| 3 | -0,09 | **-0,06** | **-0,17** | -0,02 | -0,11 | |
| 4 | -0,061 | **0,018** | **-0,083** | 0,061 | -0,10 | |
| 5 | -0,086 | **-0,050** | **-0,151** | -0,149 | -0,10 | |
| 6 | -0,096 | **-0,087** | **-0,194** | -0,120 | -0,11 | |
| 7 | -0,125 | **-0,061** | **-0,222** | -0,126 | -0,16 | |
| 8 | -0,114 | **-0,085** | **-0,168** | -0,119 | -0,08 | |
| 9 | -0,055 | **-0,023** | **-0,125** | -0,054 | -0,10 | |
| 10 | -0,065 | **-0,046** | **-0,166** | -0,060 | -0,12 | |
| 11 | **-0,02** | -0,03 | **-0,16** | -0,03 | -0,13 | -0,10 |
| 12 | **-0,03** | -0,04 | **-0,11** | -0,06 | -0,08 | |
| 13 | -0,04 | **0,00** | **-0,13** | 0,02 | -0,13 | |
| 14 | -0,04 | **-0,04** | **-0,11** | -0,05 | -0,07 | |
| 15 | -0,05 | **-0,02** | **-0,14** | -0,06 | -0,12 | |
| 16 | -0,04 | **-0,01** | **-0,09** | -0,05 | -0,09 | |
| 17 | -0,03 | **-0,03** | **-0,13** | -0,06 | -0,10 | |
| 18 | -0,03 | **-0,03** | **-0,15** | -0,08 | -0,12 | |

La différence de hauteur entre la structure et la douille étant dépendante de la qualité et/ou de la dimension de la fraisure, les résultats montrent que si la surface d'extrémité 92 de la douille est strictement affleurante à la première face 73 de la structure, la surface de rupture 102 est coplanaire à la surface d'extrémité 32 et à la surface d'extrémité de la douille dans un intervalle variant entre 7 et 16 µm, avec une moyenne de 10 µm. La coplanéité entre la surface de rupture 102 et la surface d'extrémité 32 varie dans le même intervalle. Cette excellente coplanéité est due à la position du centre du cercle de la portion rayonnée de la gorge 52 de rupture dans un plan coplanaire au plan de la surface d'extrémité 32 de la tête de vis.

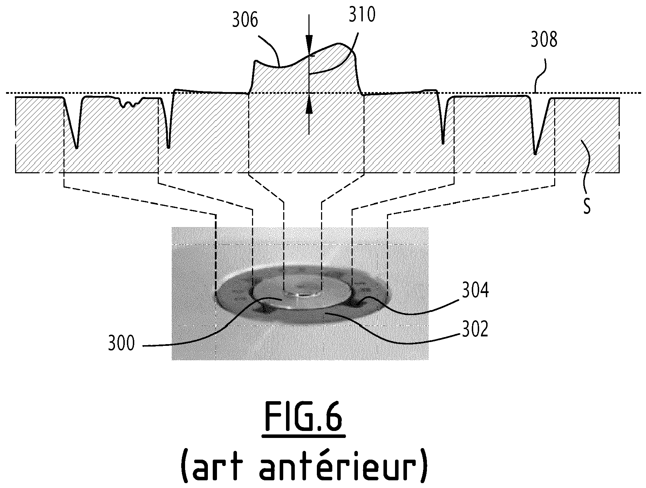

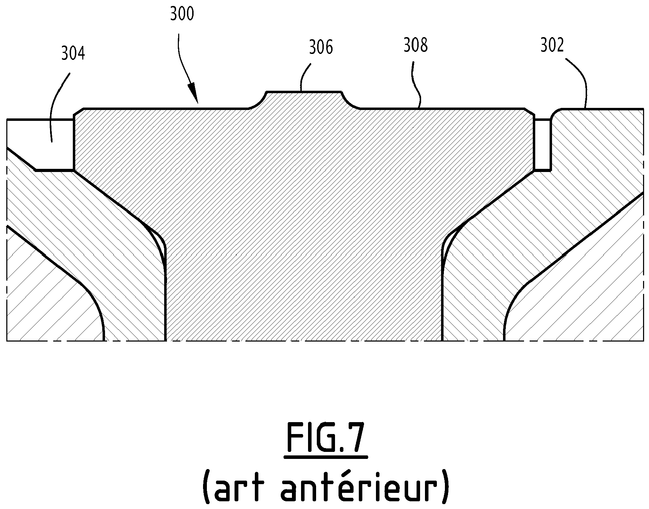

La Demanderesse a réalisé une série d'essais sur des fixations de l'art antérieur décrites dans la demande de brevet WO2007/100906. Ce type de fixation comprend une vis présentant une tête 300 et une portion filetée, un élément de préhension solidaire de la tête à l'opposé de la portion filetée, la vis étant configurée pour casser sous une contrainte en torsion supérieure à un seuil prédéterminé. La fixation comprend une douille 302 comprenant des creux 304 pour maintenir la douille fixe pendant que la vis est entraînée en rotation. Une telle fixation dans la configuration installée est représentée en figure 6 et en figure 7.

La vis comprend une saillie 306 dirigée vers l'extérieur de la structure S, d'une hauteur 310 variant entre 0,131 mm et 0,279 mm au-dessus de la surface d'extrémité 308 de la tête de vis. Une telle fixation présente donc une planéité faible, puisque l'épaisseur du plan comprenant la surface de rupture est de 148 µm.

Une coupe au binoclaire représentée en figure 7 montre que la vis ne comporte pas de gorge de rupture entre la tête 300 de vis et l'élément de préhension, de sorte que l'élément casse dans un plan bien au-dessus du plan contenant la surface d'extrémité de la tête de vis, puisque l'écart maximum entre le plan contenant la surface de rupture et la surface d'extrémité de la tête de vis est de 279 µm.

Bien entendu, l'invention n'est pas limitée au seul exemple décrit. L'invention pourrait être utilisée pour former une fixation installée en appliquant seulement un couple à l'élément de préhension, par exemple une fixation décrite dans la demande de brevet WO 2004/104429, ou WO2016/118694, ou WO2007/100906, ou WO2014/074862, ou WO2013043673. L'élément de préhension peut également être de forme différente que celle décrite précédemment, du moment que la forme autorise le passage d'un couple. Cela peut être un simple cylindre entrainé par un nez de pose comprenant une cage à galet, par exemple décrit dans la demande WO2014/187821.

De plus, comme indiqué précédemment, l'invention s'applique également au cas où la tête de la vis est protubérante. Dans une fixation comprenant une telle vis, l'extrémité libre de la douille et la surface d'extrémité de la vis ne sont pas coplanaires mais ladite surface d'extrémité est avantageusement plane et sans accroc.

## Revendications

1. Vis (10) s'étendant selon un axe principal (20) et comprenant une tête (22) et une portion filetée (26), une extrémité de la tête opposée à la portion filetée formant une surface d'extrémité (32) sensiblement disposée dans un premier plan perpendiculaire à l'axe principal,
la vis comprenant en outre un élément de préhension (30) solidaire de la tête à l'opposé de la portion filetée, une jonction (50) entre ladite tête et ledit élément de préhension comprenant une gorge (52) de rupture configurée pour casser sous une contrainte en torsion supérieure à un seuil prédéterminé, ladite gorge de rupture ayant sensiblement une forme de révolution autour de l'axe principal,
**caractérisée en ce que**, dans un deuxième plan comprenant l'axe principal, une section de la gorge de rupture présente une portion (60) en arc de cercle, un centre (68) dudit cercle étant sensiblement disposé dans le premier plan, de sorte qu'un plan contenant une surface (102) de rupture de la gorge (52) soit sensiblement confondu avec ledit premier plan.

2. Vis selon la revendication 1, dans laquelle la portion en arc de cercle (60) de la gorge de rupture comporte une première (70) et une seconde (72) parties, respectivement disposées sur la tête (22) et sur l'élément de préhension (30) de part et d'autre du premier plan,
ladite première partie (70) formant une cavité (104) dans la tête par rapport à la première surface d'extrémité (32).

3. Vis selon la revendication 1 ou la revendication 2, dans laquelle la gorge de rupture présente une première (62) et une seconde (64) lèvres tangentes à la portion en arc de cercle (60) et sensiblement tronconiques, lesdites première et seconde lèvres étant respectivement disposées sur la tête (22) et sur l'élément de préhension (30).

4. Vis selon la revendication 3, dans laquelle :
- la première lèvre (62) forme un premier angle (α) avec la surface d'extrémité (32) de la tête, et un deuxième angle (β) avec la deuxième lèvre (64) ;
- le premier angle (α) est compris entre 5° et 25° et plus préférentiellement compris entre 10° et 15° ; et
- le deuxième angle (β) est compris entre 15° et 60°, plus préférentiellement compris entre 25° et 35° et encore plus préférentiellement proche de 30°.

5. Vis selon l'une des revendications précédentes, dans laquelle la tête (22) est fraisée.

6. Fixation (12) comprenant :
- une vis (10) selon l'une des revendications précédentes ; et
- une douille (86) comprenant une collerette (88) et un corps (90) sensiblement cylindrique, adjacents selon l'axe principal ;
le corps de la douille comportant : une zone de déformation (96) apte à former un bulbe externe (100) ; et une portion taraudée (98) apte à coopérer avec la portion filetée (26) de la vis.

7. Fixation selon la revendication 6 prise en combinaison avec la revendication 5, dans lequel la collerette (88) de la douille est tronconique et apte à recevoir la tête fraisée (22) de la vis,
une extrémité (92) de ladite collerette, opposée au corps de la douille, étant sensiblement disposée dans un troisième plan perpendiculaire à l'axe principal.

8. Assemblage (16) comprenant :
- au moins une structure (14) comprenant une première (73) et une seconde (74) faces opposées et un perçage (76) débouchant sur chacune desdites faces ; et
- une fixation (12) selon la revendication 6 ou la revendication 7,
dans lequel :
- la collerette (88) de la douille est au contact de la tête (22) de la vis et est en butée dans le perçage (76) de la structure ;
- la zone de déformation (96) du corps de la douille est dans une configuration installée, sous forme d'un bulbe externe (100) au contact de la seconde face (74) de la structure ; et
- la tête (22) et l'élément de préhension (30) de la vis (10) sont dissociés, ladite tête présentant une surface de rupture (102) sensiblement coplanaire à la surface d'extrémité (32) de la vis et à l'extrémité (92) de la collerette de la douille.

9. Assemblage selon la revendication 8 prise en combinaison avec la revendication 2, dans lequel la surface de rupture (102) est bordée par la première partie (70) de la portion en arc de cercle (60) de la gorge de rupture (52).

10. Procédé d'installation d'une fixation (12) selon l'une des revendications 6 ou 7 dans une structure (14) comprenant une première (73) et une seconde (74) faces opposées et un perçage (76) débouchant sur chacune desdites faces, ledit procédé comprenant successivement les étapes suivantes :
- assemblage de la portion filetée (26) de la vis (10) avec la portion taraudée (98) de la douille (86), la zone de déformation (96) du corps de ladite douille étant dans une configuration initiale cylindrique ;
- insertion de la douille dans le perçage (76) de la structure (14), du côté de la première face (73) ;
- maintien de la collerette (88) au contact de la première face ;
- traction ou vissage de la vis dans la douille jusqu'à formation d'un bulbe (100) externe au contact de la seconde face ; et
- torsion de l'élément de préhension (30) par rapport à la tête (22) de la vis autour de l'axe principal, jusqu'à rupture de la gorge de rupture (52) et formation de la surface de rupture (102) sur la tête.
